Europäisches Patentamt

European Patent Office

Office européen des brevets

(19)

(11) Veröffentlichungsnummer: **0 260 573**
**A2**

(12)     .     .             **EUROPÄISCHE PATENTANMELDUNG**

(21) Anmeldenummer: 87113084.5

(22) Anmeldetag: 08.09.87

(51) Int. Cl.⁴: **A23J 7/00** , B01F 17/00

(30) Priorität: 18.09.86 US 908688

(43) Veröffentlichungstag der Anmeldung:
23.03.88 Patentblatt 88/12

(84) Benannte Vertragsstaaten:
BE DE ES FR GB IT LU NL SE

(71) Anmelder: Lucas Meyer GmbH & Co
Ausschläger Elbdeich 62
D-2000 Hamburg 28(DE)

(72) Erfinder: Ziegelitz, Rüdiger
Amselweg 39
D-2072 Bargteheide(DE)
Erfinder: Nasner, Alice, Dr.
Krabbenkamp 3 E
D-2057 Reinbek(DE)

(74) Vertreter: Glaeser, Joachim, Dipl.-Ing. et al
Dr. M. Kohler Dipl.-Ing. C. Gernhardt
Dipl.-Ing. J. Glaeser Königstrasse 28
D-2000 Hamburg 50(DE)

(54) Verfahren zur Herstellung eines hydrolysierten Lecithins, sowie Anwendung des hydrolysierten Lecithins.

(57) Verfahren zur Herstellung von hydrolysiertem Lecithin aus einem Lecithinsubstrat. Das Ausgangsmaterial wird mit ungefähr 5 bis ungefähr 30 Gew.-% Wasser vermischt, in welchem ungefähr 0,01 bis ungefähr 0,5 Mol eines wasserlöslichen Calciumsalzes und ein Lecithin hydrolysierendes Enzym enthalten sind. Dadurch entsteht ein hydrolysiertes Lecithin mit verbessertem Emulgiervermögen und erhöhtem Lysophospholipidgehalt, welches vor allem in Lebensmitteln als Emulgator gut einsatzfähig ist.

EP 0 260 573 A2

## Verfahren zur Herstellung eines hydrolysierten Lecithins, sowie Anwendung des hydrolysierten Lecithins. ,

Die vorliegende Erfindung betrifft ein Verfahren zur Herstellung von hydrolysiertem Lecithin pflanzlichen Ursprungs mit einem hohen Gehalt an ungesättigten Fettsäuren mit gegenüber dem Ausgangsmaterial verbesserten Emulgier-Eigenschaften.

Man hat zur Herstellung von Emulgatoren bereits Reinlecithin in peroxidfreiem Ether mit Schlangengiftenzym behandelt. Dieses Verfahren ist sehr unwirtschaftlich, da die toxischen Eigenschaften von Schlangengift nachträglich durch Säurebehandlung zerstört werden müssen. Außerdem ist Schlangengift sehr teuer, und die Verwendung von Ether ist unwirtschaftlich und recht gefährlich (DE-PS 1 078 282).

Weiter ist aus der Literatur bekannt, daß auch Pankreas-Extrakt gut zur Herstellung von hydrolysiertem Lecithin geeignet ist. Um mit Pankreas-Extrakt diese Hydrolyse durchführen zu können, muß erst die Lipase, die in diesem Extrakt enthalten ist, durch halbstündiges Erhitzen in einer wässrigen Suspension bei 80 - 90°C zerstört werden, um dann die Phospholipase A in einer ca. vierstündigen Behandlung durch Alkohol extrahieren zu können (H. Wittkoff, in The Phosphatides 1951, 99-108).

Auch die Tatsache, daß hydrolysierte Lecithine durch direkte Behandlung mit einer wässrigen Suspension von Pankreas-Extrakt, die einer halbstündigen thermischen Behandlung unter 80°C unterworfen wurden, gewonnen werden können (DE-PS 1 692 567), ändert nichts daran, daß alle Reaktionen in hochprozentigen wässrigen Suspensionen stattfinden und dadurch die Trocknungskosten sehr hoch sind. So werden in DE-PS 1 692 567 die Rohphosphatidgemische oder Fraktionen in der 0,5 bis 5-fachen Menge Wasser suspendiert und mit dem Pankreas-Extrakt, das in einer 1:1 bis 1:20 Wassersuspension vorliegt, gemischt.

Überraschenderweise wurde nun herausgefunden, daß man auch mit nur 5-30 Gewichtsprozent Wasser unter Enzymzugabe hydrolysierte Lecithine mit verbesserten Emulgier-Eigenschaften erhalten kann. Eine vorteilhafte Ausführungsart des erfindungsgemäß Verfahrens ist dadurch geprägt, daß man 0,01 - 0,5 % Enzym mit 0,01 - 0,5 Mol Calcium-Ionen in 5 - 30 % Leitungswasser suspendiert, und diese Suspension zum Rohphosphatidgemisch, das auf eine Temperatur von 25 - 80°C erwärmt wurde, zugibt und 4 - 24 h bei konstanter Temperatur rühren läßt, was zu einem hydrolysierten koscheren Lecithin führt.

Als Enzymquelle wurde nun auch überraschenderweise herausgefunden, daß sich ein Extrakt aus Rhizopus arrhizus oder Aspergillus niger eignet. Beide Extrakte enthalten Lipasen (E.C.3.1.1.3) und lassen sich sehr gut in Wasser suspendieren.

Die Enzyme werden gemäß der Erfindung dem zu hydrolysierenden Material in Mengen zwischen 0,01 und 0,5 % bezogen auf das Gewicht des Ausgangsmaterials zugegeben. Die Zugabe von Calcium-Ionen dient dazu, den optimalen pH-Bereich bei der Hydrolyse-Reaktion einzustellen. Die sehr geringe Menge Wasser 5 - 30 % bezogen auf das Ausgangsmaterial genügt, um eine optimale Verteilung des Enzyms an der Oberfläche zwischen Fett (Rohphosphatid-Gemisch) und Wasser zu gewährleisten.

Die Reaktionsdauer wird beeinflußt von der Reaktionstemperatur und der zugesetzten Enzymmenge. Die Reaktionstemperatur liegt zwischen 25 und 80°C. Die ideale Temperatur zur Durchführung der Hydrolyse liegt zwischen 40 und 60°C. Bei dieser Temperatur werden die unerwünschten Nebenreaktionen, die aus früheren Veröffentlichungen bekannt sind, wie Bräunung und Autoxidation, die zum Qualitätsverlust des Produktes führen, praktisch ausgeschaltet.

Durch die spezielle Kombination von Enzymen, Wasser und Calcium-Ionen ist es möglich, auch bei niedrigen Temperaturen ein Endprodukt zu erhalten, das sehr gute Emulgier-Eigenschaften hat.

Die erfindungsgemäß hergestellten Emulgatoren können wegen ihrer physiologischen Unbedenklichkeit vor allem für Emulsionen auf dem Lebensmittel-und Futtermittelsektor, wie rekonstituierte Milch, Kälbermilch, rekonstituierter Rahm, Mayonnaisen, Salatcremes, Mehlverbesserungsmittel, Backhilfestoffe u.ä. verwendet werden. Das Verfahren gemäß der Erfindung wird nachfolgend an einigen Beispielen näher erläutert:

### Beispiel 1

100 g rohes Sojalecithin wird auf 50°C erwärmt. Eine Suspension aus 0,3 g Enzymextrakt aus Rhizopus arrhizus und 0,3 g Calciumchlorid in 10 g Leitungswasser wird dem vorgewärmten Lecithin zugegeben, und die Mischung wird bei 50°C ca. 5 h gerührt. Das hydrolysierte Lecithin wird im Vakuum getrocknet und anschließend analysiert.

Ausgangsmaterial:

Acetonunlösliches:   70%
Säurezahl:   20 mg KOH/g
PC-Gehalt:   17%
LPC-Gehalt   <1%


Hydrolysiertes Lecithin:

Acetonunlösliches:   64%
Säurezahl:   37 mg KOH/g
PC-Gehalt:   12%
LPC-Gehalt:   5%
LPE-Gehalt:   9%


## Beispiel 2

100 g rohes Sojalecithin wird auf 50°C erwärmt. Eine Suspension aus 0,1 g Enzymextrakt aus Aspergillus niger und 0,4 g Calciumhydroxid in 15 g Leitungswasser wird dem vorgewärmten Lecithin zugegeben. Unter Rühren läßt man die Mischung 24 h lang reagieren. Zum Ende der Reaktion wird das Reaktionsgemisch im Vakuum getrocknet. Die Säurezahl im hydrolysierten Produkt stieg bis auf 80mg KOH/g an. Das Produkt ist dünnflüssig (Viskosität: 30 P bei 25°C).

Der Gesamtlysophospholipidgehalt des Endproduktes lag bei 20 % (bestimmt mit Hilfe der HPLC) gegenüber von ca. 1 % des Ausgangsproduktes.


## Beispiel 3

Das in Beispiel 2 hergestellte hydrolysierte Sojalecithin wurde durch Acetonextraktion von den bei der Hydrolyse entstehenden freien Fettsäuren und den restlichen Neutrallipiden abgetrennt. Es konnte nach dem Trocknen des Rückstandes ein frei fließendes Pulver gewonnen werden. Folgende Analyse wurde ermittelt:

Acetonunlösliches:   95 %
Säurezahl:   20 mg KOH/g
PC:   8 %
LPC:   12 %
LPE:   15 %

Das entölte hydrolysierte Produkt ist in Wasser sehr gut dispergierbar.

Eine 20 %ige Öl-in-Wasser-Emulsion, die unter Zugabe von 1 % Emulgator bei 50°C hergestellt wurde, und weiterhin bei dieser Temperatur gehalten wurde, zeigte auch nach 24 Stunden keinen Wasserabsatz.

Anschließend einige Beispiele zur Anwendung des erfindungsgemäß hergestellten Emulgators als Mehlverbesserungsmittel bzw. Backhilfsmittel. Der erfindungsgemäß hergestellte Emulgator kann als Ersatz für Diacetylweinsäureester (DAWE) eingesetzt werden.


## Beispiel 4

Das im Beispiel 3 hergestellte hydrolysierte Sojalecithin wurde in einem Kastenbackversuch verbacken:
a) Mehl:   Weizenauszugsmehl
Teigführung:   Konventionelle direkte Teigführung
Backware:   Kastenweißbrot

| Behandlung | Volumen |
|---|---|
| 0 | 100 % |
| 0,3 % DAWE | 118 % |
| 0,2 % Lecithin aus Beispiel 3 | 118 % |
| 0,4 % Lecithin aus Beispiel 3 | 125 % |
| 0,6 % Lecithin aus Beispiel 3 | 130 % |

b) Mehl: Weizenauszugsmehl
Teigführung: Chorleywood-Brotprozeß
Backware: Kastenweißbrot

| Behandlung | Volumen |
|---|---|
| 0 | 100 % |
| 0,3 % DAWE | 107 % |
| 0,2 % Lecithin aus Beispiel 3 | 105 % |
| 0,4 % Lecithin aus Beispiel 3 | 108 % |
| 0,8 % Lecithin aus Beispiel 3 | 109 % |

### Beispiel 5

Das in Beispiel 2 hergestellte hydrolysierte Sojalecithin wurde mit Milchbestandteilen versprüht. Je nach der versprühten Lecithinmenge wurde entsprechend dieses Produkt bei Backversuchen dosiert. Die erzielten Ergebnisse sind identisch mit denen aus Beispiel 4.

### Ansprüche

1. Verfahren zur Herstellung von hydrolysiertem Lecithin mit verbessertem Emulgiervermögen, dadurch gekennzeichnet, daß Lecithin mit ungefähr 5 bis ungefähr 30 Gew.-% Wasser, welches ungefähr 0,01 bis ungefähr 0,5 Mol eines wasserlöslichen Calciumsalzes und ein Lecithin hydrolysierendes Enzym enthält, während einer ausreichenden Zeitspanne gemischt wird.

2. Verfahren zur enzymatischen Hydrolysierung eines Lecithinsubstrats zwecks Erhöhung des Lysophospholipidgehaltes und zwecks Verbesserung des Emulgiervermögens, dadurch gekennzeichnet, daß die enzymatische Hydrolyse bei Anwesenheit von ungefähr 5 bis ungefähr 30 Gew.-% Wasser bezogen auf das Gewicht des Lecithinsubstrats, wobei das Wasser ungefähr 0,01 bis ungefähr 0,5 Mol eines wasserlöslichen Calciumsalzes enthält, durchgeführt wird.

3. Verfahren nach einem der Ansprüche 1 oder 2, dadurch gekennzeichnet, daß das Lecithin hydrolysierende Enzym aus einem Lipase erzeugenden Pilz hergeleitet wird.

4. Verfahren nach Anspruch 3, dadurch gekennzeichnet, daß das Lecithin hydrolysierende Enzym aus einem Pilz erzeugt wird, der aus der Gruppe ausgewählt worden ist, die Rhizopus arrhizus und Aspergillus niger umfaßt.

5. Verfahren nach einem der Ansprüche 1 bis 4, dadurch gekennzeichnet, daß als wasserlösliches Calciumsalz entweder Calciumhydroxid oder Calciumchlorid ausgewählt wird.

6. Verfahren nach einem der Ansprüche 1 bis 5, dadurch gekennzeichnet, daß das Lecithinsubstrat bei einer Temperatur von ungefähr 25 bis ungefähr 80°C, vorzugsweise ungefähr 40 bis ungefähr 60°C, hydrolysiert wird.

7. Verfahren nach einem der Ansprüche 1 bis 6, dadurch gekennzeichnet, daß das Lecithin hydrolysierende Enzym in einer Menge von ungefähr 0,01 bis ungefähr 0,5 % bezogen auf das Gewicht des Lecithinsubstrats bzw. des Ausgangsmaterials eingesetzt wird.

4

8. Verfahren nach einem der Ansprüche 1 bis 7, dadurch gekennzeichnet, daß die hydrolysierte Lecithinzusammensetzung entölt und durch Erhitzung unter Vakuum getrocknet wird, um eine granulatförmige hydrolysierte Lecithinzusammensetzung zu erzeugen.

9. Anwendung des nach den Ansprüchen 1 bis 8 hergestellten Lecithins als Emulgator in Futtermitteln, Lebensmitteln, einschließlich in koscheren Lebensmitteln, sowie als Backhilfs-und Mehlverbesserungsmittel.